# EUROPEAN PATENT SPECIFICATION

(11) **EP 2 642 387 B1**
(45) Date of publication and mention of the grant of the patent: **15.07.2015**
(21) Application number: 11851330.8
(22) Date of filing: 31.08.2011
(51) Int. Cl.: G06F 9/50

(54) **METHOD, MEMORY MANAGEMENT UNIT AND COMPUTER SYSTEM FOR MANAGING MEMORY OF COMPUTER SYSTEM**
VERFAHREN, SPEICHERVERWALTUNGSEINHEIT UND COMPUTERSYSTEM ZUR SPEICHERVERWALTUNG EINES COMPUTERSYSTEMS
PROCÉDÉ, UNITÉ DE GESTION DE MÉMOIRE ET SYSTÈME INFORMATIQUE POUR GÉRER UNE MÉMOIRE DU SYSTÈME INFORMATIQUE

(43) Date of publication of application: 25.09.2013
(73) Proprietor: Huawei Technologies Co., Ltd., Longgang District Shenzhen, Guangdong 518129 (CN)
(72) Inventor: LIU, Jiang, Guangdong 518129 (CN); WANG, Wei, Guangdong 518129 (CN); QIU, Xishi, Guangdong 518129 (CN)
(74) Representative: Goddar, Heinz J.
(86) International application number: PCT/CN2011/079202
(87) International publication number: WO 2012/083724

(56) References cited:
- EP-A2- 2 237 155
- WO-A2-03/054713
- CN-A- 1 639 702
- CN-A- 1 838 057
- US-A1- 2004 215 865
- US-A1- 2009 006 402
- US-B2- 7 222 200

## Description

### FIELD OF THE INVENTION

The present invention relates to the field of computers, and in particular to a method for managing a memory of a computer system, a memory management unit and a computer system in the computer field.

### BACKGROUND OF THE INVENTION

A medium or high-end server is required to have a certain flexibility, and a hot-swap feature of a device is an important forming part of the flexibility, that is, the server may implement the dynamic addition or deletion of the device without interrupting a computer system, so as to achieve the objectives of capacity expansion and fault isolation, thereby meeting the requirements of reliability, service capability or energy saving of the computer system.

Hot-swap devices generally include, for example, a processor, a memory or an input output (Input Output, referred to as IO) peripheral device, where the memory is one of the most important forming parts of the hot-swap devices as the memory is one of the important resources of the computer system. Memory hot-plugging refers to that a memory device is added without interrupting the computer system, and memory hot-drawing refers to that a memory device is deleted without interrupting the computer system. The memory hot-drawing needs to migrate and recover an occupied memory in a target memory. However, a non-migratable page exists in the computer system, including a physical page occupied by a kernel and a physical page locked by a user process.

In an application process, because the physical page occupied by the kernel is marked as a non-migratable page by the computer system, in a process of applying for a memory by the kernel, the computer system may allocate a physical memory from a specific area (a non-migratable memory area), so as to achieve an objective of putting the target memory offline. When the user process applies for a memory, the memory belongs to a common migratable memory, but after the user process designates to lock the memory, the memory is marked as a non-migratable page, which becomes an obstacle in putting the target memory offline. Whether the memory locked by the user process can be put offline is one of the key factors in implementing the hot swap of the memory.

For the problem that the memory locked by the user process is hard to be put offline, usually attempts may be repeatedly made to migrate the memory, with an expectation that the memory is unlocked by the user process during the repeated attempts. However, the migration method through repeated attempts cannot ensure that the memory is put offline because performing unlocking on the memory locked by the user process is not affected by the attempts to migrate the memory at all, and no necessary relationship exists between the two. Therefore, in the process of attempting to put the memory offline, the memory locked by the user process may be persistently kept in a locked state.

Therefore, there is a need for an appropriate solution to manage the memory of the computer system, so as to put the memory locked by the user process offline, thereby implementing the hot swap of the memory.

EP 2237155 A2 discloses an apparatus includes: a memory; a management memory for storing first virtual addresses used by the first program, second virtual addresses used by the second program and management information indicative of association between first and second virtual addresses and physical addresses of the memory; and a processor for executing the first, the second and a management programs, the management program including: receiving a request to assign a shared area to be shared by the first and second programs from the second program; determining a physical address of the shared area corresponding to one of the first and one of the second virtual addresses; transmitting a notification of data writing by the first program to the second program; locking the shared area so as to prevent the second program from writing data after the notification; and unlocking the shared area after the second program has read data from the shared area.

US 2009/006402 A1 discloses systems and methods for dynamically selecting a locking strategy for a request by a source to use a stored data object in a computerized system. According to one implementation, a method is provided that comprises receiving, by a locking layer, a request from the source to use a stored data object, and determining, with the locking layer, a locking strategy for the request based on a set of locking configuration rules modifiable by a system administrator. The method also includes associating the request with the determined locking strategy. In some implementations, the request and locking strategy may be forwarded to a data management server, which obtains the physical locks on the data objects. The locking strategy may also be changed by the locking layer when the use of the object changes during runtime of the application.

US 2004/215865 A1 discloses a data processing system that provides hot-plug add and remove functionality for individual, hot-pluggable components without disrupting current operations of the overall processing system. The processing system includes an interconnect fabric that includes hot plug connector at which an external hot-pluggable component can be coupled to the data processing system and logic components include configuration logic and routing and operating logic. When a hot-pluggable component is connected to the hot plug connector, the service element automatically detects the connection and selects the correct configuration file for the extended system. Once the configuration file is loaded and the system checks of the new element indicates the new element is ready for integration, the new element is integrated into the existing system, and the OS allocates workload to the new element. From a customer perspective, the entire process thus occurs without powering down or disrupting the operation of the existing element.

WO/2003/054713 A2 discloses hot plug interface control method and apparatus. Hot plug modules comprising processors, memory, and/or I/O hubs may be added to and removed from a running computing device without rebooting the running computing device. The hot plug modules and computing device comprise hot plug interfaces that support hot plug addition and hot plug removal of the hot plug modules.

### SUMMARY OF THE INVENTION

Embodiments of the present invention provide a method for managing a memory of a computer system, a memory management unit and a computer system, so as to put a memory locked by a user process offline, thereby implementing the hot swap of the memory.

In one aspect, an embodiment of the present invention provides a method for managing a memory of a computer system, where the method includes: receiving an allocation request sent by a user process, where the allocation request is used for requesting allocating the memory of the computer system for the user process; according to the allocation request, allocating the memory for the user process and setting an offline flag for the memory, where the offline flag is used for indicating one of several offline modes of the memory that will be used when it is required to put locked memory offline; receiving a locking request sent by the user process, where the locking request is used for requesting locking the memory; according to the locking request and the offline flag of the memory, performing locking on the memory; and putting the memory offline according to the offline mode indicated in the offline flag of the memory.

In another aspect, an embodiment of the present invention provides a memory management unit, where the memory management unit includes: a first receiving module, configured to receive an allocation request sent by a user process, where the allocation request is used for requesting allocating a memory of a computer system for the user process; an allocation module, configured to allocate the memory for the user process according to the allocation request received by the first receiving module, and set an offline flag for the memory, where the offline flag is used for indicating one of several offline modes of the memory that will be used when it is required to put the locked memory offline; a second receiving module, configured to receive a locking request sent by the user process, where the locking request is used for requesting locking the memory of the computer system; a locking module, configured to perform locking on the memory according to the locking request received by the second receiving module and the offline flag of the memory; and an offline module, configured to put the memory locked by the locking module offline according to the offline mode indicated in the offline flag of the memory.

In still another aspect, an embodiment of the present invention provides a computer system, where the computer system includes at least one memory; and a memory management unit according to an embodiment of the present invention, and the memory management unit is configured to manage the at least one memory. The memory management unit includes: a first receiving module, configured to receive an allocation request sent by a user process, where the allocation request is used for requesting allocating a memory of the computer system for the user process; an allocation module, configured to allocate the memory for the user process according to the allocation request received by the first receiving module and set an offline flag for the memory, where the offline flag is used for indicating one of several offline modes of the memory that will be used when it is required to put the locked memory offline; a second receiving module, configured to receive a locking request sent by the user process, where the locking request is used for requesting locking the memory of the computer system; a locking module, configured to perform locking on the memory according to the locking request received by the second receiving module and the offline flag of the memory; and an offline module, configured to put the memory locked by the locking module offline according to the offline mode indicated in the offline flag of the memory.

Based on the above technical solutions, in the method for managing the memory of the computer system, the memory management unit and the computer system according to the embodiments of the present invention, through the interaction between a kernel and the user process, and setting an offline mode for the memory, the kernel can correspondingly put the memory offline according to the offline mode of the memory, so as to put the memory locked by the user process offline, thereby implementing the hot swap of the memory and avoiding the waste of system resources.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are some embodiments of the present invention, and persons skilled in the art may derive other drawings from the accompanying drawings without creative efforts.
FIG. 1 is a schematic flow chart of a method for managing a memory of a computer system according to an embodiment of the present invention;
FIG. 2 is a schematic flow chart of a method for managing a memory of a computer system according to another embodiment of the present invention;
FIG. 3 is a schematic flow chart of a method for managing a memory of a computer system according to still another embodiment of the present invention;
FIG. 4 is a schematic flow chart of a method for modifying an offline mode of a memory according to an embodiment of the present invention;
FIG. 5 is a schematic flow chart of a method for locking a memory according to an embodiment of the present invention;
FIG. 6 is a schematic flow chart of a method for putting a locked memory offline according to an embodiment of the present invention;
FIG. 7 is a schematic flow chart of a method for unlocking a memory according to an embodiment of the present invention;
FIG. 8 is a schematic block diagram of a memory management unit according to an embodiment of the present invention;
FIG. 9 is a schematic block diagram of a memory management unit according to another embodiment of the present invention;
FIG. 10 is a schematic block diagram of a memory management unit according to still another embodiment of the present invention;
FIG. 11 is a schematic block diagram of a locking module according to an embodiment of the present invention;
FIG. 12 is a schematic block diagram of an offline module according to an embodiment of the present invention;
FIG. 13 is a schematic block diagram of a determination module according to an embodiment of the present invention; and
FIG. 14 is a schematic block diagram of a computer system according to an embodiment of the present invention.

### DETAILED DESCRIPTION OF THE EMBODIMENTS

The technical solutions according to the embodiments of the present invention are to be clearly described in the following with reference to the accompanying drawings in the embodiments of the present invention. It is obvious that the embodiments to be described are a part rather than all of the embodiments of the present invention. All other embodiments obtained by persons skilled in the art based on the embodiments of the present invention without creative efforts shall fall within the protection scope of the present invention.

It should be noted that, the technical solutions according to the embodiments of the present invention may be applicable to various computer systems, including a personal computer (Personal Computer, referred to as PC), a large-scale computer system or various supercomputers (Supercomputers). In the embodiments of the present invention, a computer system including at least one memory is taken as an example for description, but the embodiments of the present invention are not limited thereto.

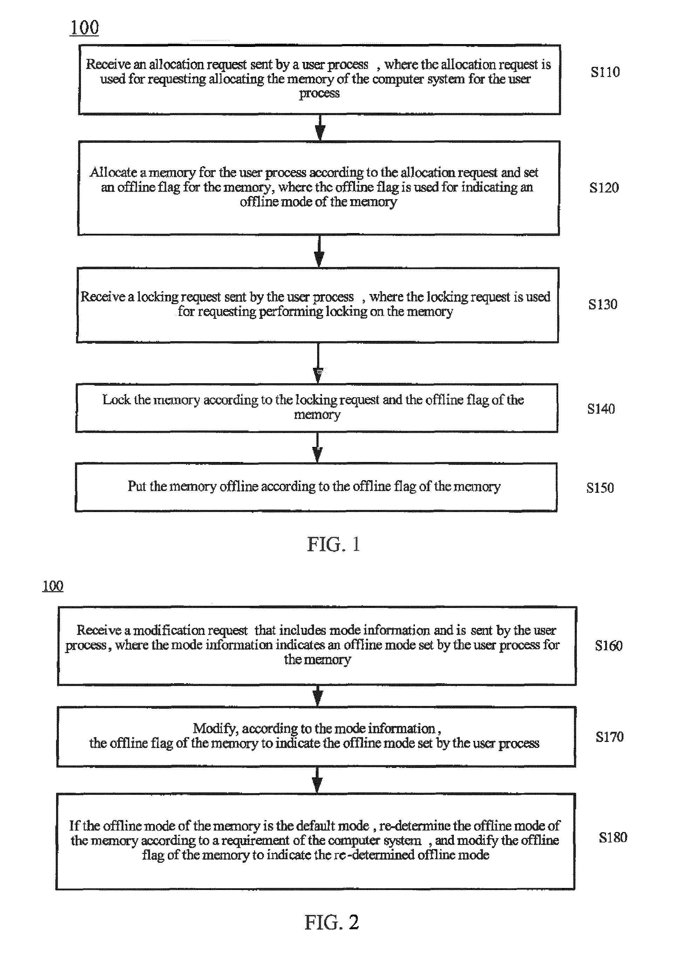

FIG. 1 is a schematic flow chart of a method 100 for managing a memory of a computer system according to an embodiment of the present invention. As shown in FIG. 1, the method 100 includes:
S110: Receive an allocation request sent by a user process, where the allocation request is used for requesting allocating the memory of the computer system for the user process.
S120: Allocate a memory for the user process according to the allocation request and set an offline flag for the memory, where the offline flag is used for indicating an offline mode of the memory.
S130: Receive a locking request sent by the user process, where the locking request is used for requesting performing locking on the memory.
S140: Lock the memory according to the locking request and the offline flag of the memory.
S 150: Put the memory offline according to the offline flag of the memory.

After receiving an allocation request that is sent by a user process and used to request allocating a memory of the computer system, a kernel, an operating system or a memory management unit of a computer system allocates a memory for the user process, and sets an offline flag for the memory, for indicating an offline mode of the memory; and after receiving a request that is sent by the user process and used to request performing locking on the memory, the kernel or the operating system may perform locking on the memory according to the locking request of the user process and the offline flag of the memory, and may put the memory offline according to the offline flag of the memory when it is required to put the locked memory offline.

Therefore, in the method for managing the memory of the computer system according to the embodiment of the present invention, through the interaction between the kernel and the user process, and setting the offline mode for the memory, the kernel can correspondingly put the memory offline according to the offline mode of the memory, so as to put the memory locked by the user process offline, thereby implementing the hot swap of the memory and avoiding the waste of system resources.

In the embodiment of the present invention, the offline mode or an offline policy may include at least one of a default (DEFAULT) mode, a migrate (MIGRATE) mode, a notify (NOTIFY) mode and a forcible unlock (UNLOCK) mode. Optionally, the offline mode includes the default mode, the migrate mode, the notify mode and the forcible unlock mode.

For the default mode, the user process may designate that the memory is put offline through the default mode, and when the user process does not designate the offline policy, such a mode may also be used. For the migrate mode, it refers to that before the memory is locked, the memory needs to be migrated to a non-migratable area and is then locked. For, the notify mode, it refers to that before the kernel is required to take the memory offline, the kernel triggers the user process to unlock the memory. For the forcible unlock mode, it refers to that the kernel may forcibly perform unlocking on the memory when the kernel is required to put the memory offline, and then puts the memory offline. It should be noted that, names and brief description of the four offline modes in the embodiment of the present invention are merely provided for ease of understanding of the embodiment of the present invention, but the embodiment of the present invention is not limited thereto. Moreover, the specific meanings of the four offline modes should be understood with reference to the specific operations described in the embodiment of the present invention.

In the embodiment of the present invention, the user process may modify the offline mode of an applied memory according to a requirement, that is, the user process may set the offline mode of the memory. Therefore, as shown in FIG. 2, the method 100 for managing a memory of a computer system according to the embodiment of the present invention may further include:
S160: Receive a modification request that includes mode information and is sent by the user process, where the mode information indicates an offline mode set by the user process for the memory.
S170: Modify, according to the mode information, the offline flag of the memory to indicate the offline mode set by the user process.

That is, after the user process applies for the memory, the user process may set an offline mode for the applied memory according to a requirement, and sends a modification request including the mode information to the kernel, so that the kernel modifies, according to the mode information, the offline flag of the memory to indicate the offline mode set by the user process.

In the embodiment of the present invention, after the kernel receives the locking request sent by the user process, the kernel may determine the offline mode of the memory according to the offline flag of the memory, and if the offline mode of the memory is the default mode, the kernel may reset the offline mode of the memory as desired. That is, as shown in FIG. 2, the method 100 according to the embodiment of the present invention may further include:

S180: If the offline mode of the memory is the default mode, re-determine the offline mode of the memory according to the requirement of the computer system, and modify the offline flag of the memory to indicate the re-determined offline mode.

Optionally, if the computer system requires system operating performance, the kernel determines the offline mode of the memory to be the default mode; and if the computer system requires hot-swap performance, the kernel determines the offline mode of the memory to be the migrate mode.

It should be noted that, the method according to the embodiment of the present invention may be executed by the kernel, the operating system or the memory management unit. For ease of description, the kernel is used as an execution body in the following, but the embodiment of the present invention is not limited thereto.

Specifically, in step S110, the user process may send, according to a requirement of the user process, an allocation request to the kernel for requesting allocating a memory.

In step S120, the kernel allocates a memory for the user process according to the allocation request and sets an offline flag for the memory, where the offline flag is used for indicating an offline mode of the memory. Optionally, the kernel sets an offline flag indicating a default mode for the allocated memory. For example, the kernel may add an offline flag PG_flag for the memory, and assigns a value DEFAULT to the offline flag, that is, PG_flag = DEFAULT. Definitely, the kernel may also set other offline modes for the memory, and the embodiment of the present invention is not limited thereto.

Optionally, the user process may set or formulate the offline mode or an offline policy for the applied memory through an interface provided by the kernel. Specifically, in step S160, the user process may send, according to a requirement of the user process, a modification request to the kernel for modifying the offline mode of the memory, where the modification request includes mode information for indicating the offline mode set by the user process for the memory. For example, the modification request may include a BEHAVIOR parameter, where the BEHAVIOR parameter may be assigned a value such as DEFAULT, MIGRATE, NOTIFY, and UNLOCK, which respectively indicate that the user process sets the offline mode of the memory to be a default mode, a migrate mode, a notify mode and a forcible unlock mode.

In step S 170, the kernel modifies the offline mode of the memory according to the mode information. Specifically, the kernel may modify, according to the BEHAVIOR parameter delivered in the modification request, the offline flag of the memory to indicate the offline mode set by the user process.

Specifically, for example, for a memory A whose offline mode is requested to be modified, the kernel may parse the parameter BEHAVIOR included in the modification request. If BEHAVIOR = = DEFAULT, the kernel may determine that the user process sets the offline mode of the memory A to be the default mode. At this time, the kernel may modify the offline flag PG_flag of the memory A, that is, assign a value DEFAULT to the offline flag, that is, PG_flag = DEFAULT. If BEHAVIOR = = MIGRATE, the kernel may determine that the user process sets the offline mode of the memory A to be the migrate mode, and at this time, the kernel may assign a value MIGRATE to the offline flag of the memory A, that is, PG_flag = MIGRATE. Likewise, if BEHAVIOR = = NOTIFY, the kernel may determine that the user process sets the offline mode of the memory A to be the notify mode, and at this time, the kernel may assign a value NOTIFY to the offline flag of the memory A, that is, PG_flag = NOTIFY. If BEHAVIOR = = UNLOCK, the kernel may determine that the user process sets the offline mode of the memory A to be the forcible unlock mode, and at this time, the kernel may assign a value UNLOCK to the offline flag of the memory A, that is, PG_flag = UNLOCK.

In step S130, the user process may request, according to a requirement of the user process, to the kernel for performing locking on the memory of the computer system.

In step S140, after the kernel receives the locking request sent by the user process, the kernel needs to determine an offline mode of the memory requested to be locked, and locks the memory according to the specific offline mode and the locking request.

Specifically, the kernel may determine the offline mode of the memory by parsing the offline flag of the memory. For example, if the kernel determines that the offline flag of the memory is PG_flag =DEFAULT, the offline mode of the memory is the default mode. Likewise, if the kernel determines that the offline flag of the memory PG_flag is MIGRATE, NOTIFY or UNLOCK, the kernel may determine that the offline mode of the memory is the migrate mode, the notify mode or the forcible unlock mode.

Optionally, if the offline flag of the memory indicates the default mode, the notify mode, or the forcible unlock mode, the memory is locked. If the offline flag of the memory indicates the migrate mode, the memory is migrated, and if the memory is migrated successfully, the migrated memory is locked and an offline flag indicating the migrate mode is set for the migrated memory. If the memory is migrated unsuccessfully, the memory is locked and the offline flag of the memory is modified to indicate the default mode.

Optionally, if the kernel determines that the offline mode of the memory is the default mode, the kernel may re-determine a more appropriate offline mode for the memory. That is, in step S180, the kernel re-determines the offline mode of the memory according to the requirement of the computer system, and modifies the offline flag of the memory to indicate the re-determined offline mode.

In step S150, if the kernel needs to put the memory locked by the user process offline, the kernel may determine the offline mode of the memory by parsing the offline flag of the memory, and put the memory offline according to the offline mode.

Optionally, if the offline flag of the memory indicates the default mode or the migrate mode, the memory is waited to be unlocked, and is migrated after the memory is unlocked. If the offline flag of the memory indicates the notify mode, the user process is triggered to unlock the memory, the memory is migrated after the memory is unlocked, and the user process is triggered to lock the migrated memory after the memory is migrated. If the offline flag of the memory indicates the forcible unlock mode, the memory is unlocked and is migrated after the memory is unlocked, the migrated memory is locked, and an offline flag indicating the forcible unlock mode is set for the migrated memory.

Therefore, in the method for managing the memory of the computer system according to the embodiment of the present invention, through the interaction between the kernel and the user process, and setting the offline mode for the memory, the kernel can correspondingly put the memory offline according to the offline mode of the memory, so as to put the memory locked by the user process offline, thereby implementing the hot swap of the memory and avoiding the waste of system resources.

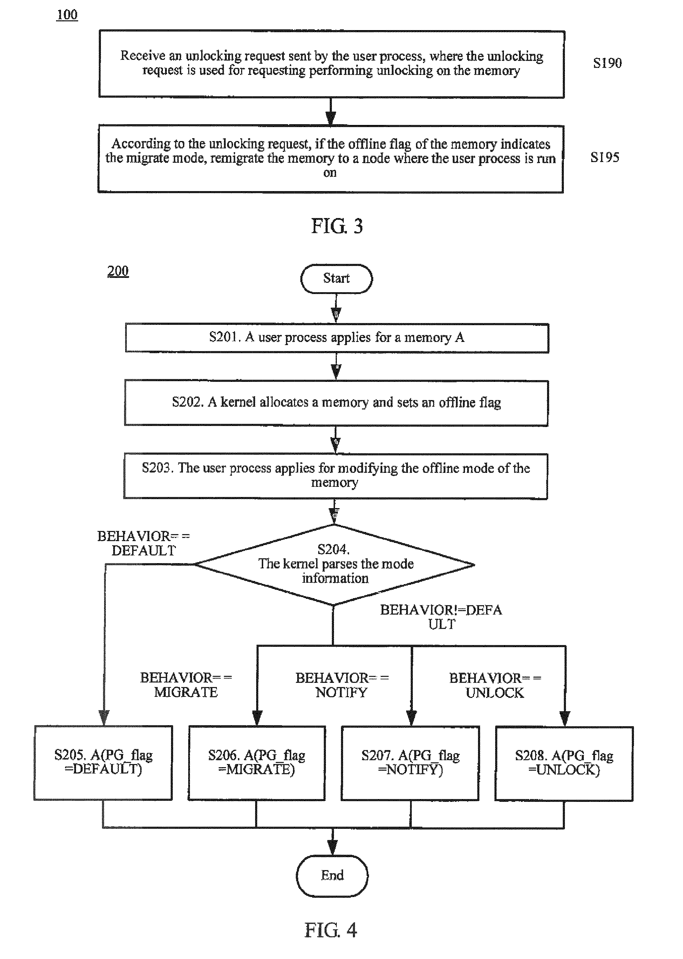

In an embodiment of the present invention, optionally, if the user process applies for unlocking the locked memory, as shown in FIG. 3, the method 100 according to the embodiment of the present invention further includes:
S190: Receive an unlocking request sent by the user process, where the unlocking request is used for requesting performing unlocking on the memory.
S 195: According to the unlocking request, if the offline flag of the memory indicates the migrate mode, remigrate the memory to a node where the user process is run on.

That is, in a process that the user process actively requests unlocking the locked memory, if the offline flag of the memory indicates that the offline mode of the memory is the migrate mode, before the locked memory is unlocked, the kernel may apply for a local memory, so as to remigrate the locked memory to the node where the user process is run on. For a locked memory with the offline mode being the default mode, the notify mode or the forcible unlock mode, the kernel may directly unlock the locked memory according to the application of the user process. For example, in this case, for a locked memory with a MIGRATE offline flag, before being unlocked, the memory is remigrated to the node where the user process is run on, which can further improve the system performance.

It should be noted that, the sequence numbers of the above steps do not imply an execution sequence, and the execution sequence of the steps should be determined according to the functions and internal logic, which is not intended to limit the implementation process of the embodiment of the present invention in any way.

Therefore, in the method for managing the memory of the computer system according to the embodiment of the present invention, through the interaction between the kernel and the user process, and setting the offline mode for the memory, the kernel can correspondingly put the memory offline according to the offline mode of the memory, so as to put the memory locked by the user process offline, thereby implementing the hot swap of the memory, improving the system performance and avoiding waste of system resources.

With reference to the specific embodiments shown in FIG. 4 to FIG. 7, a method for modifying an offline mode of a memory, a method for locking a memory, a method for putting a locked memory offline, and a method for unlocking a memory according to the embodiments of the present invention are described in detail below.

As shown in FIG. 4, a method 200 for setting an offline mode of a memory according to an embodiment of the present invention includes:
S201: A user process applies for a memory A according to a requirement of the user process.
S202: A kernel allocates a memory for the user process according to an allocation request sent by the user process and sets an offline flag for the memory, where the offline flag is used for indicating an offline mode of the memory. Optionally, the kernel sets the offline flag PG_flag of the memory to be a default mode DEFAULT, that is, PG_flag=DEFAULT.

Optionally, after the user process applies for and obtains the memory A, the user process may set the offline mode of the memory A through an interface provided by the kernel, where the offline mode includes a default mode, a migrate mode, a notify mode and a forcible unlock mode.

S203: The user process sends a modification request to the kernel for applying for modifying the offline mode of the memory, where the modification request includes mode information for indicating the offline mode set by the user process for the memory, and the mode information is, for example, a BEHAVIOR parameter.

S204: The kernel determines the offline mode set by the user process for the memory A by parsing the mode information such as the BEHAVIOR parameter delivered by the user process.

If the offline mode set by the user process for the memory A is the default mode, the process proceeds to step S205; and if the offline mode set by the user process for the memory A is not the default mode, the process proceeds to step S206, step S207, or step S208. Specifically, if the offline mode set by the user process for the memory A is the migrate mode, the process proceeds to step S206; if the offline mode set by the user process for the memory A is the notify mode, the process proceeds to step S207; and if the offline mode set by the user process for the memory A is the forcible unlock mode, the process proceeds to step S208.

S205: The kernel assigns a value DEFAULT to the offline flag of the memory, that is, PG_flag = DEFAULT. At this time, for the memory A with the offline mode set by the user process being the default mode, the process of setting the offline mode of the memory A is over.

S206: The kernel assigns a value to the offline flag of the memory A, that is, PG_flag = MIGRATE. At this time, for the memory A with the offline mode set by the user process being the migrate mode, a process of setting an offline mode for the memory A is over.

S207: The kernel assigns a value NOTIFY to the offline flag of the memory A, that is, PG_flag = NOTIFY. At this time, for the memory A with the offline mode set by the user process being the notify mode, the process of setting the offline mode of the memory A is over.

S208: The kernel assigns a value UNLOCK to the offline flag of the memory A, that is, PG_flag = UNLOCK. At this time, for the memory A with the offline mode set by the user process being the forcible unlock mode, the process of setting the offline mode of the memory A is over.

It should be noted that, the sequence numbers of the above steps do not imply an execution sequence, and the execution sequence of the steps should be determined according to the functions and internal logic, which is not intended to limit the implementation process of the embodiment of the present invention in any way.

Therefore, through the interaction between the kernel and the user process, and setting the offline mode for the memory, the kernel can correspondingly perform locking on the memory and put the memory offline according to the offline mode of the memory, so as to put the memory locked by the user process offline.

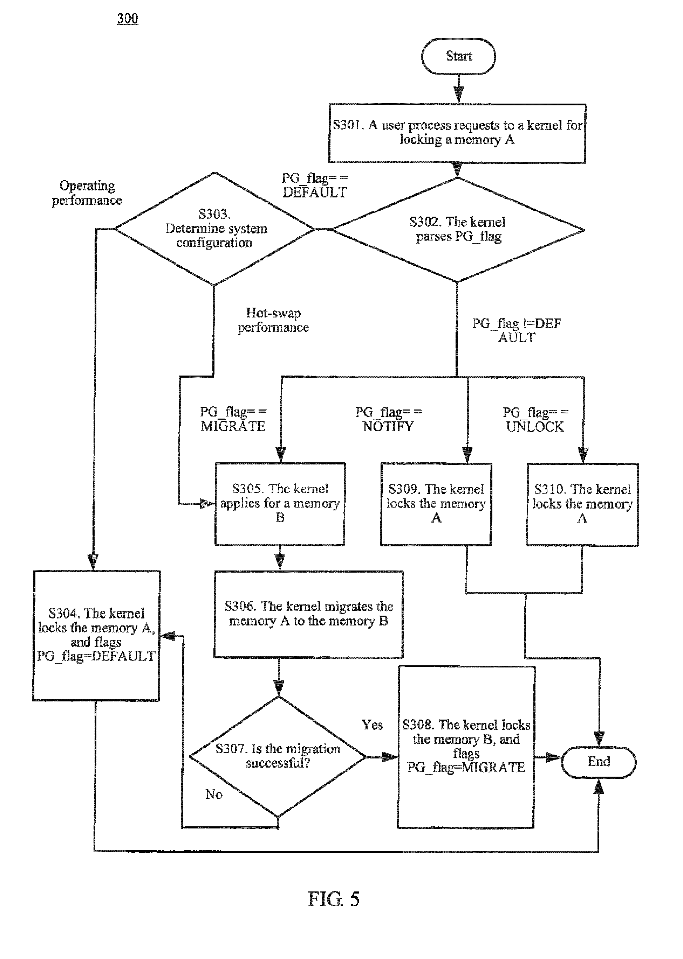

FIG. 5 is a schematic flow chart of a method 300 for locking a memory according to an embodiment of the present invention. As shown in FIG. 4, the method 300 includes:
S301: A user process may request, according to a requirement, to a kernel for locking a memory A.
S302: The kernel determines an offline mode set for the memory A by parsing an offline flag PG_flag of the memory A.

If the kernel determines that the offline mode of the memory A is a default mode, that is, PG_flag = = DEFAULT, the process proceeds to step S303; and if the kernel determines that the offline mode of the memory A is not the default mode, that is, PG_flag !=DEFAULT, the process proceeds to step S305, step S309 or step S310. Specifically, if the kernel determines that the offline mode of the memory A is a migrate mode, that is, PG_flag = = MIGRATE, the process proceeds to step S305; if the kernel determines that the offline mode of the memory A is a notify mode, that is, PG_flag = = NOTIFY, the process proceeds to step S309; and if the kernel determines that the offline mode of the memory A is a forcible unlock mode, that is, PG_flag = = UNLOCK, the process proceeds to step S310.

S303: The kernel determines configuration or requirements of a computer system. If the kernel determines that the computer system requires the system operating performance, the process proceeds to step S304; and if the computer system requires the hot-swap performance, the process proceeds to step S305.

S304: If the offline mode of the memory A is a default mode, the kernel locks the memory A, and assigns a value DEFAULT to the offline flag of the memory, that is, PG_flag = DEFAULT. At this time, for the memory A with the offline mode being the default mode, the process of performing locking on the memory A is over.

S305: If the offline mode of the memory A is a migrate mode, the kernel re-applies for a memory B at a designated area of the system, where the designated area is a non-migratable memory area and is generally limited on a primary node.

S306: The kernel migrates the memory A to the memory B, and releases the memory A.

S307: The kernel determines whether the memory A is migrated successfully. If the memory A is migrated successfully, the process proceeds to step S308; otherwise, the process proceeds to step S304.

S308: The kernel locks the memory B, sets an offline flag PG_flag for the memory B, and assigns a value MIGRATE to the offline flag, that is, PG_flag = MIGRATE. At this time, for the memory A with the offline mode being the migrate mode, the process of performing locking on the memory A is over.

S309: If the offline mode of the memory A is a notify mode, the kernel locks the memory A. At this time, for the memory A with the offline mode being the notify mode, the process of performing locking on the memory A is over.

S310: If the offline mode of the memory A is the forcible unlock mode, the kernel locks the memory A. At this time, for the memory A with the offline mode being the forcible unlock mode, the process of performing locking on the memory A is over.

It should be noted that, the sequence numbers of the above steps do not imply an execution sequence, and the execution sequence of the steps should be determined according to the functions and internal logic, which is not intended to limit the implementation process of the embodiment of the present invention in any way.

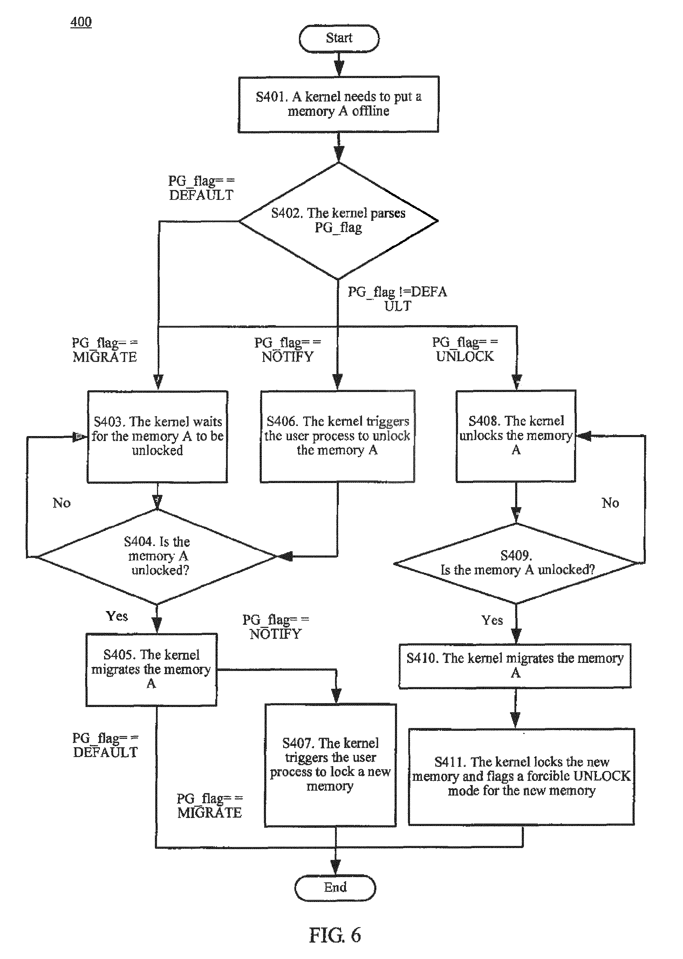

FIG. 6 is a schematic flow chart of a method 400 for putting a locked memory offline according to an embodiment of the present invention. As shown in FIG. 6, the method 400 includes:
S401: A kernel determines to put a memory A offline according to a requirement.
S402: The kernel determines an offline mode set for the memory A by parsing an offline flag PG_flag of the memory A.

If the kernel determines that the offline mode of the memory A is a default mode, that is, PG_flag = = DEFAULT, the process proceeds to step S403; and if the kernel determines that the offline mode of the memory A is not the default mode, that is, PG_flag !=DEFAULT, the process proceeds to step S403, step S406 or step S408. Specifically, if the kernel determines that the offline mode of the memory A is a migrate mode, that is, PG_flag = = MIGRATE, the process proceeds to step S403; if the kernel determines that the offline mode of the memory A is a notify mode, that is, PG_flag = = NOTIFY, the process proceeds to step S406; and if the kernel determines that the offline mode of the memory A is a forcible unlock mode, that is, PG_flag = = UNLOCK, the process proceeds to step S408.

S403: If the offline mode of the memory A is a default mode or a migrate mode, the kernel waits for the memory A to be unlocked by the user process.

S404: The kernel checks whether the memory A is unlocked by the user process. If the memory A is unlocked, the process proceeds to step S405; otherwise, the process proceeds to step S403, that is, the kernel continues to wait for the memory A to be unlocked.

S405: if the memory A is unlocked by the user process, the kernel migrates the memory A. It should be noted that, the migrating the memory A is migrating the memory A to other memories. For a new memory after the migration, the kernel may set an offline flag of the new memory to be PG_flag = DEFAULT. At this time, for the memory A with the offline mode being the default mode or the migrate mode, the process of putting the memory A offline is over.

S406: If the offline mode of the memory A is a notify mode, the kernel triggers the user process to unlock the memory, and migrates the memory A after the memory A is unlocked by the user process. That is, in the case that the offline mode of the memory A is the notify mode, the process proceeds from step S406, to step S404, step S405 and step S407.

S407: After the memory A is migrated, the kernel triggers the user process to lock a new memory after the migration. For the new memory after the migration, the kernel may set an offline flag of the new memory to be PG_flag = NOTIFY. At this time, for the memory A with the offline mode being the notify mode, the process of putting the memory A offline is over.

S408: If the offline mode of the memory A is a forcible unlock mode, the kernel unlocks the memory A.

S409: The kernel checks whether the memory A is successfully unlocked. If the memory A is unlocked, the process proceeds to step S410; otherwise, the process proceeds to step S408, that is, the kernel continues to unlock the memory A.

S410: After the memory A is unlocked, the kernel migrates the memory A, for example, the kernel migrates the memory A to a memory B.

S411: The kernel locks the new memory B, and sets an offline flag for the new memory B, so as to identify that an offline mode of the new memory B is a forcible unlock mode, that is, a value assigned to the offline flag is UNLOCK, that is, PG_flag = UNLOCK. At this time, for the memory A with the offline mode being the forcible unlock mode, the process of putting the memory A offline is over.

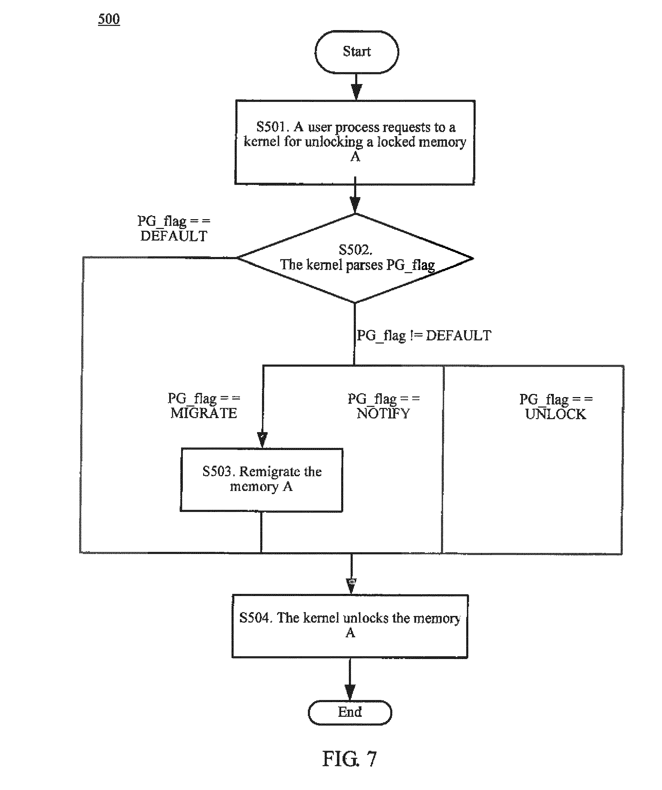

FIG. 7 is a schematic flow chart of a method 500 for unlocking a memory according to an embodiment of the present invention. As shown in FIG. 7, the method 500 includes:
S501: A user process requests to a kernel for unlocking a locked memory A.
S502: The kernel determines an offline mode of the memory A by parsing an offline flag of the memory A.

If the kernel determines that the offline mode of the memory A is a default mode, that is, PG_flag = = DEFAULT, the process proceeds to step S504; and if the kernel determines that the offline mode of the memory A is not the default mode, that is, PG_flag !=DEFAULT, the process proceeds to step S503 or step S504. Specifically, if the kernel determines that the offline mode of the memory A is a migrate mode, that is, PG_flag = = MIGRATE, the process proceeds to step S503 and step S504; and if the kernel determines that the offline mode of the memory A is a notify mode, that is, PG_flag = = NOTIFY; or a forcible unlock mode, that is, PG_flag = = UNLOCK, the process is directly proceeded to step S504.

S503: The kernel remigrates the memory A to a node where the user process is run on, so as to further improve system performance.

S504: The kernel unlocks the memory A. At this time, the process of unlocking the locked memory A by the user process is over.

It should be noted that, the sequence numbers of the above steps do not imply an execution sequence, and the execution sequence of the steps should be determined according to the functions and internal logic, which is not intended to limit the implementation process of the embodiments of the present invention in any way.

Therefore, in the method for managing the memory of the computer system according to the embodiment of the present invention, through interaction between the kernel and the user process, and setting the offline mode for the memory, the kernel can correspondingly put the memory offline according to the offline mode of the memory, so as to put the memory locked by the user process offline, thereby implementing the hot swap of the memory, improving the system performance and avoiding the waste of system resources.

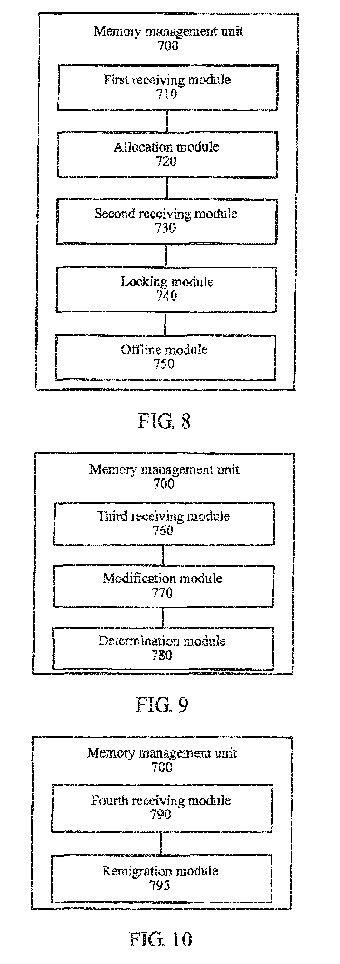

In the above with reference to FIG. 1 to FIG. 7, the method for managing the memory of the computer system according to the embodiments of the present invention is described in detail, and a memory management unit and a computer system according to the embodiments of the present invention are described in detail with reference to FIG. 8 to FIG. 14 in the following.

FIG. 8 is a schematic block diagram of a memory management unit 700 according to an embodiment of the present invention. As shown in FIG. 8, the memory management unit 700 includes:
a first receiving module 710, configured to receive an allocation request sent by a user process, where the allocation request is used for requesting allocating a memory of a computer system for the user process;
an allocation module 720, configured to allocate the memory for the user process according to the allocation request received by the first receiving module 710, and set an offline flag for the memory, where the offline flag is used for indicating an offline mode of the memory;
a second receiving module 730, configured to receive a locking request sent by the user process, where the locking request is used for requesting locking the memory of the computer system;
a locking module 740, configured to perform locking on the memory according to the locking request received by the second receiving module 730 and the offline flag of the memory; and
an offline module 750, configured to put the memory locked by the locking module offline according to the offline flag of the memory.

In the memory management unit according to the embodiment of the present invention, through the interaction between a kernel and the user process, and setting the offline mode for the memory, the kernel can correspondingly put the memory offline according to the offline mode of the memory, so as to put the memory locked by the user process offline, thereby implementing the hot swap of the memory, improving the system performance and avoiding the waste of system resources.

In the embodiment of the present invention, optionally, the offline mode or an offline policy may include at least one of a DEFAULT (DEFAULT) mode, a MIGRATE (MIGRATE) mode, a NOTIFY (NOTIFY) mode and a forcible UNLOCK (UNLOCK) mode. Optionally, the offline mode includes the default mode, the migrate mode, the notify mode and the forcible unlock mode.

In an embodiment of the present invention, optionally, as shown in FIG. 9, the memory management unit 700 further includes:
a third receiving module 760, configured to receive a modification request that includes mode information and is sent by the user process, where the mode information indicates an offline mode set by the user process for the memory; and
a modification module 770, configured to modify, according to the mode information received by the third receiving module 760, the offline flag of the memory to indicate the offline mode set by the user process.

In the embodiment of the present invention, optionally, as shown in FIG. 9, the memory management unit 700 further includes:
a determination module 780, configured to, if the offline mode of the memory is the default mode, re-determine the offline mode of the memory according to a requirement of the computer system, and modify the offline flag of the memory to indicate the re-determined offline mode.

Optionally, as shown in FIG. 10, the memory management unit 700 further includes:
a fourth receiving module 790, configured to receive an unlocking request sent by the user process, where the unlocking request is used for requesting performing unlocking on the memory; and
a remigration module 795, configured to, according to the unlocking request received by the fourth receiving module and when the offline flag of the memory indicates the migrate mode, remigrate the memory to a node where the user process is run on.

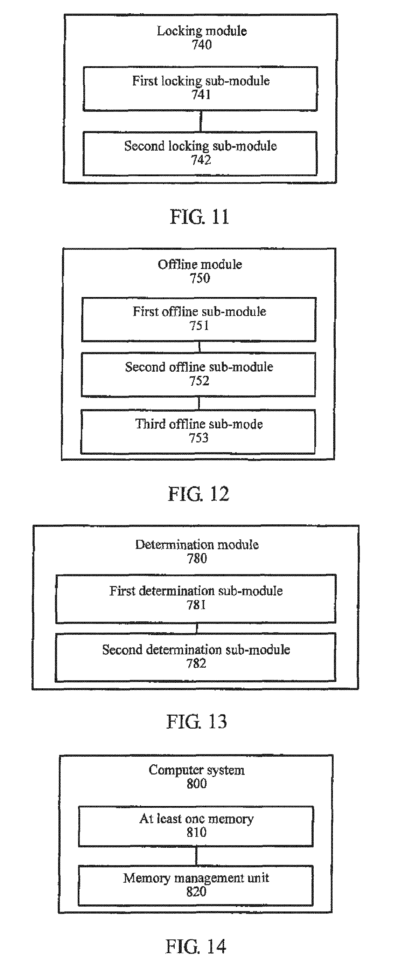

In the embodiment of the present invention, as shown in FIG. 11, the locking module 740 according to the embodiment of the present invention may include:
a first locking sub-module 741, configured to perform locking on the memory when the offline flag of the memory indicates the default mode, the notify mode or the forcible unlock mode; and
a second locking sub-module 742, configured to migrate the memory when the offline flag of the memory indicates the migrate mode, if the memory is migrated successfully, perform locking on the migrated memory and set an offline flag indicating the migrate mode for the migrated memory; and if the memory is migrated unsuccessfully, perform locking on the memory and modify the offline flag of the memory to indicate the default mode.

Optionally, as shown in FIG. 12, the offline module 750 includes:
a first offline sub-module 751, configured to wait for the memory to be unlocked when the offline flag of the memory indicates the default mode or the migrate mode, and migrate the memory after the memory is unlocked;
a second offline sub-module 752, configured to trigger the user process to unlock the memory when the offline flag of the memory indicates the notify mode, migrate the memory after the memory is unlocked, and trigger the user process to lock the migrated memory after the memory is migrated; and
a third offline sub-mode 753, configured to perform unlocking on the memory when the offline flag of the memory indicates the forcible unlock mode, migrate the memory after the memory is unlocked, perform locking on the migrated memory, and set, for the migrated memory, an offline flag indicating the forcible unlock mode.

Optionally, as shown in FIG. 13, the determination module 780 includes:
a first determination sub-module 781, configured to determine the offline mode of the memory to be the default mode when the computer system requires the system operating performance; and
a second determination sub-module 782, configured to determine the offline mode of the memory to be the migrate mode when the computer system requires the hot-swap performance.

The memory management unit 700 according to the embodiment of the present invention may correspond to a kernel or an operating system in the method according to the embodiments of the present invention, and the foregoing and other operations and/or functions of each module in the memory management unit 700 are respectively provided for implementing the corresponding steps of the methods 100 to 500 in FIG. 1 to FIG. 7, which, for simplicity, are not described in detail here again.

In the memory management unit according to the embodiment of the present invention, through the interaction between the kernel and the user process, and setting the offline mode for the memory, the kernel can correspondingly put the memory offline according to the offline mode of the memory, so as to put the memory locked by the user process offline, thereby implementing the hot swap of the memory, improving the system performance and avoiding the waste of system resources.

FIG. 14 is a schematic block diagram of a computer system 800 according to an embodiment of the present invention. As shown in FIG. 14, the computer system includes at least one memory 810 and a memory management unit 820 according to the embodiment of the present invention, where the memory management unit 820 is configured to manage the at least one memory 810, and may include:
a first receiving module, configured to receive an allocation request sent by a user process, where the allocation request is used for requesting allocating a memory of a computer system for the user process;
an allocation module, configured to allocate the memory for the user process according to the allocation request received by the first receiving module, and set an offline flag for the memory, where the offline flag is used for indicating an offline mode of the memory;
a second receiving module, configured to receive a locking request sent by the user process, where the locking request is used for requesting performing locking on the memory of the computer system;
a locking module, configured to perform locking on the memory according to the locking request received by the second receiving module and the offline flag of the memory; and
an offline module, configured to put the memory locked by the locking module offline according to the offline flag of the memory.

In the embodiment of the present invention, optionally, the offline mode includes at least one of a default mode, a migrate mode, a notify mode and a forcible unlock mode. Optionally, the memory management unit 820 further includes: a third receiving module, configured to receive a modification request that includes mode information and is sent by the user process, where the mode information indicates an offline mode set by the user process for the memory; and a modification module, configured to modify, according to the mode information received by the third receiving module, the offline flag of the memory to indicate the offline mode set by the user process.

Optionally, the memory management unit 820 further includes: a determination module, configured to, if the offline mode of the memory is the default mode, re-determine the offline mode of the memory according to a requirement of the computer system, and modify the offline flag of the memory to indicate the re-determined offline mode.

Optionally, the memory management unit 820 further includes: a fourth receiving module, configured to receive an unlocking request sent by the user process, where the unlocking request is used for requesting performing unlocking on the memory; and a remigration module, configured to, according to the unlocking request received by the fourth receiving module when the offline flag of the memory indicates the migrate mode, remigrate the memory to a node where the user process is run on.

In the embodiment of the present invention, optionally, the locking module includes: a first locking sub-module, configured to perform locking on the memory when the offline flag of the memory indicates the default mode, the notify mode or the forcible unlock mode; and a second locking sub-module, configured to migrate the memory when the offline flag of the memory indicates the migrate mode, if the memory is migrated successfully, perform locking on the migrated memory and set, for the migrated memory, an offline flag indicating the migrate mode; and if the memory is migrated unsuccessfully, perform locking on the memory and modify the offline flag of the memory to indicate the default mode.

In the embodiment of the present invention, optionally, the offline module includes: a first offline sub-module, configured to wait for the memory to be unlocked when the offline flag of the memory indicates the default mode or the migrate mode, and migrate the memory after the memory is unlocked; a second offline sub-module, configured to trigger the user process to unlock the memory when the offline flag of the memory indicates the notify mode, migrate the memory after the memory is unlocked, and trigger the user process to lock the migrated memory after the memory is migrated; and a third offline sub-mode, configured to perform unlocking on the memory when the offline flag of the memory indicates the forcible unlock mode, migrate the memory after the memory is unlocked, perform locking on the migrated memory, and set, for the migrated memory, an offline flag indicating the forcible unlock mode.

The memory management unit 820 according to the embodiment of the present invention may correspond to the memory management unit 700 in the device according to the embodiment of the present invention, and the foregoing and other operations and/or functions of each module in the memory management unit 820 are respectively provided for implementing the corresponding steps of the methods 100 to 500 in FIG. 1 to FIG. 7, which, for simplicity, are not described in detail here again.

In the computer system according to the embodiment of the present invention, through the interaction between a kernel and the user process, and setting the offline mode for the memory, the kernel can correspondingly put the memory offline according to the offline mode of the memory, so as to put the memory locked by the user process offline, thereby implementing the hot swap of the memory, improving the system performance and avoiding the waste of system resources.

It should be noted that, the locked memory in the embodiments of the present invention is not limited to a locked memory applied for by the user process, and a locked memory for other purposes may also be put offline by using the solution according to the embodiments of the present invention. In addition, the migration policy in the offline policy for the locked memory is not limited to the solution which is formulated by the user process and executed by the kernel, and the migration policy may be that, the user process designates the memory to apply for moving to a special memory area, thereby implementing the requirement of putting the memory offline without migration.

Persons skilled in the art may realize that, units and algorithm steps of examples described in combination with the embodiments disclosed here can be implemented by electronic hardware, computer software, or the combination of the two. In order to clearly describe the interchangeability between the hardware and the software, compositions and steps of each example have been generally described according to functions in the foregoing descriptions. Whether the functions are executed by hardware or software depends on particular applications and design constraint conditions of the technical solutions. Persons skilled in the art may use different methods to implement the described functions for each particular application, but it should not be considered that the implementation goes beyond the scope of the present invention.

It can be clearly understood by persons skilled in the art that, for the purpose of convenient and brief description, for a detailed working process of the foregoing system, device and unit, reference may be made to the corresponding process in the method embodiments, and the details are not to be described here again.

In several embodiments provided in the present application, it should be understood that the disclosed system, device, and method may be implemented in other ways. For example, the described device embodiments are merely exemplary. For example, the unit division is merely logical functional division and may be other division in actual implementation. For example, multiple units or components may be combined or integrated into another system, or some features may be ignored or not performed. Furthermore, the shown or discussed coupling or direct coupling or communication connection may be accomplished through indirect coupling or communication connection between some interfaces, devices or units, or may be electrical, mechanical, or in other forms.

Units described as separate components may be or may not be physically separated. Components shown as units may be or may not be physical units, that is, may be integrated or may be distributed to a plurality of network units. Some or all of the units may be selected to achieve the objective of the solution of the embodiment according to actual demands.

In addition, the functional units in the embodiments of the present invention may either be integrated in a processing module, or each be a separate physical unit; alternatively, two or more of the units are integrated in one unit. The integrated units may be implemented through hardware or software functional units.

If implemented in the form of software functional units and sold or used as an independent product, the integrated units may also be stored in a computer readable storage medium. Based on such understanding, the technical solution of the present invention or the part that makes contributions to the prior art, or all or a part of the technical solution may be substantially embodied in the form of a software product. The computer software product is stored in a storage medium, and contains several instructions to instruct computer equipment (such as, a personal computer, a server, or network equipment) to perform all or a part of steps of the method described in the embodiments of the present invention. The storage medium includes various media capable of storing program codes, such as, a USB flash drive, a mobile hard disk, a Read-Only Memory (ROM, Read-Only Memory), a Random Access Memory (RAM, Random Access Memory), a magnetic disk or an optical disk.

The foregoing descriptions are merely specific embodiments of the present invention, but the protection scope of the present invention is not limited hereto. Any equivalent modification or replacement easily thought of by persons skilled in the art within the technical scope of the present invention should fall within the protection scope of the present invention. Therefore, the protection scope of the present invention is subject to the appended claims.

## Claims

1. A method for managing a memory of a computer system, comprising:
receiving an allocation request sent by a user process, wherein the allocation request is used for requesting allocating the memory of the computer system for the user process;
allocating the memory for the user process according to the allocation request and setting an offline flag for the memory, wherein the offline flag is used for indicating one of several offline modes of the memory that will be used when it is required to put locked memory offline;
receiving a locking request sent by the user process, wherein the locking request is used for requesting performing locking on the memory;
performing locking on the memory according to the locking request and the offline flag of the memory; and
putting the memory offline according to the offline mode indicated in the offline flag of the memory.

2. The method according to claim 1, further comprising:
receiving a modification request that comprises mode information and is sent by the user process, wherein the mode information indicates an offline mode set by the user process for the memory; and
modifying, according to the mode information, the offline flag of the memory to indicate the offline mode set by the user process.

3. The method according to claim 1 or 2, wherein the offline mode comprises at least one of a default mode, a migrate mode, a notify mode and a forcible unlock mode.

4. The method according to claim 3, further comprising:
if the offline mode of the memory is the default mode, re-determining a more appropriate offline mode for the memory according to a requirement of the computer system, and modifying the offline flag of the memory to indicate the offline mode that is re-determined.

5. The method according to claim 4, wherein the re-determining a more appropriate offline mode for the memory according to the requirement of the computer system, comprises:
if the computer system requires system operating performance, determining the offline mode of the memory to be the default mode; and
if the computer system requires hot-swap performance, determining the offline mode of the memory to be the migrate mode.

6. The method according to any one of claims 3 to 5, wherein the performing locking on the memory according to the locking request and the offline flag of the memory comprises:
if the offline flag of the memory indicates the default mode, the notify mode or the forcible unlock mode, performing locking on the memory; and
if the offline flag of the memory indicates the migrate mode, migrating the memory, and if the memory is migrated successfully, locking a migrated memory and setting, for the migrated memory, an offline flag indicating the migrate mode; and if the memory is migrated unsuccessfully, performing locking on the memory and modifying the offline flag of the memory to indicate the default mode.

7. The method according to any one of claims 3 to 6, wherein the putting the memory offline according to the offline flag of the memory comprises:
if the offline flag of the memory indicates the default mode or the migrate mode, waiting for the memory to be unlocked, and migrating the memory after the memory is unlocked;
if the offline flag of the memory indicates the notify mode, triggering the user process to unlock the memory, migrating the memory after the memory is unlocked, and triggering the user process to lock the migrated memory after the memory is migrated; and
if the offline flag of the memory indicates the forcible unlock mode, performing unlocking on the memory, migrating the memory after the memory is unlocked, performing locking on the migrated memory, and setting, for the migrated memory, an offline flag indicating the forcible unlock mode.

8. The method according to any one of claims 3 to 7, further comprising:
receiving an unlocking request sent by the user process, wherein the unlocking request is used for requesting performing unlocking on the memory; and
according to the unlocking request, if the offline flag of the memory indicates the migrate mode, remigrating the memory to a node where the user process is run on.

9. A memory management unit, comprising:
a first receiving module, configured to receive an allocation request sent by a user process, wherein the allocation request is used for requesting allocating a memory of a computer system for the user process;
an allocation module, configured to allocate the memory for the user process according to the allocation request received by the first receiving module, and set an offline flag for the memory, wherein the offline flag is used for indicating one of several offline modes of the memory that will be used when it is required to put locked memory offline;
a second receiving module, configured to receive a locking request sent by the user process, wherein the locking request is used for requesting for performing locking on the memory of the computer system;
a locking module, configured to perform locking on the memory according to the locking request received by the second receiving module and the offline flag of the memory; and
an offline module, configured to put the memory locked by the locking module offline according to the offline mode indicated in the offline flag of the memory.

10. The memory management unit according to claim 9, further comprising:
a third receiving module, configured to receive a modification request that comprises mode information and is sent by the user process, wherein the mode information indicates an offline mode set by the user process for the memory; and
a modification module, configured to modify, according to the mode information received by the third receiving module, the offline flag of the memory to indicate the offline mode set by the user process.

11. The memory management unit according to claim 9 or 10, wherein the offline mode comprises at least one of a default mode, a migrate mode, a notify mode and a forcible unlock mode.

12. The memory management unit according to claim 11, further comprising:
a determination module, configured to, if the offline mode of the memory is the default mode, re-determine a more appropriate offline mode for the memory according to a requirement of the computer system, and modify the offline flag of the memory to indicate the offline mode that is re-determined.

13. The memory management unit according to claim 12, wherein the determination module comprises:
a first determination sub-module, configured to determine the offline mode of the memory to be the default mode when the computer system requires system operating performance; and
a second determination sub-module, configured to determine the offline mode of the memory to be the migrate mode when the computer system requires hot-swap performance.

14. The memory management unit according to any one of claims 11 to 13, wherein the locking module comprises:
a first locking sub-module, configured to perform locking on the memory when the offline flag of the memory indicates the default mode, the notify mode or the forcible unlock mode; and
a second locking sub-module, configured to migrate the memory when the offline flag of the memory indicates the migrate mode, and if the memory is migrated successfully, perform locking on a migrated memory and set, for the migrated memory, an offline flag indicating the migrate mode; and if the memory is migrated unsuccessfully, perform locking on the memory and modify the offline flag of the memory to indicate the default mode.

15. The memory management unit according to any one of claims 11 to 14, wherein the offline module comprises:
a first offline sub-module, configured to wait for the memory to be unlocked when the offline flag of the memory indicates the default mode or the migrate mode, and migrate the memory after the memory is unlocked;
a second offline sub-module, configured to trigger the user process to unlock the memory when the offline flag of the memory indicates the notify mode, migrate the memory after the memory is unlocked, and trigger the user process to lock the migrated memory after the memory is migrated; and
a third offline sub-mode, configured to perform unlocking on the memory when the offline flag of the memory indicates the forcible unlock mode, migrate the memory after the memory is unlocked, perform locking on the migrated memory, and set, for the migrated memory, an offline flag indicating the forcible unlock mode.

16. The memory management unit according to any one of claims 11 to 15, further comprising:
a fourth receiving module, configured to receive an unlocking request sent by the user process, wherein the unlocking request is used for requesting performing unlocking on the memory; and
a remigration module, configured to, according to the unlocking request received by the fourth receiving module and when the offline flag of the memory indicates the migrate mode, remigrate the memory to a node where the user process is run on.

17. A computer system, comprising at least one memory, and a memory management unit according to any one of claims 9 to 16, wherein the memory management unit is configured to manage the at least one memory.

## Patentansprüche

1. Verfahren zum Verwalten eines Speichers eines Computersystems, das die folgenden Schritte aufweist:
Empfangen einer Zuweisungsanforderung, die durch einen Benutzerprozess gesendet wird, wobei die Zuweisungsanforderung zum Anfordern des Zuweisens des Speichers des Computersystems für den Benutzerprozess verwendet wird;
Zuweisen des Speichers für den Benutzerprozess gemäß der Zuweisungsanforderung und Setzen eines Offline-Merkers für den Speicher, wobei der Offline-Merker zum Anzeigen einer von mehreren Offline-Betriebsarten des Speichers verwendet wird, die verwendet werden, wenn es erforderlich ist, um einen gesperrten Speicher in einen Offline-Zustand zu versetzen;
Empfangen einer Sperranforderung, die durch den Benutzerprozess gesendet wird, wobei die Sperranforderung zum Anfordern des Durchführens eines Sperrens am Speicher verwendet wird;
Durchführen des Sperrens am Speicher gemäß der Sperranforderung und dem Offline-Merker des Speichers; und
Versetzen des Speichers in den Offline-Zustand gemäß der Offline-Betriebsart, die im Offline-Merker des Speichers angezeigt wird.

2. Verfahren nach Anspruch 1, das ferner aufweist:
Empfangen einer Modifikationsanforderung, die Betriebsartinformationen aufweist und durch den Benutzerprozess gesendet wird, wobei die Betriebsartinformationen eine Offline-Betriebsart anzeigen, die durch den Benutzerprozess für den Speicher eingestellt wird; und
Modifizieren gemäß der Betriebsartinformationen des Offline-Merkers des Speichers, um die durch den Benutzerprozess eingestellte Offline-Betriebsart anzuzeigen.

3. Verfahren nach Anspruch 1 oder 2, wobei die Offline-Betriebsart eine Voreinstellungsbetriebsart und/oder eine Migrationsbetriebsart und/oder eine Benachrichtigungsbetriebsart und/oder eine Zwangsentsperrungsbetriebsart aufweist.

4. Verfahren nach Anspruch 3, das ferner aufweist:
wenn die Offline-Betriebsart des Speichers die Voreinstellungsbetriebsart ist, Neufestlegen einer geeigneteren Offline-Betriebsart für den Speicher gemäß einem Erfordernis des Computersystems und Modifizieren des Offline-Merkers des Speichers, um die Offline-Betriebsart anzuzeigen, die neu festgelegt ist.

5. Verfahren nach Anspruch 4, wobei das Neufestlegen einer geeigneteren Offline-Betriebsart für den Speicher gemäß dem Erfordernis des Computersystems aufweist:
wenn das Computersystem Systembetriebsleistung benötigt, Festlegen der Offline-Betriebsart des Speichers auf die Voreinstellungsbetriebsart; und
wenn das Computersystem Hot-Swap-Leistung benötigt, Festlegen der Offline-Betriebsart des Speichers auf die Migrationsbetriebsart.

6. Verfahren nach einem der Ansprüche 3 bis 5, wobei das Durchführen des Sperrens am Speicher gemäß der Sperranforderung und dem Offline-Merker des Speichers aufweist:
wenn der Offline-Merker des Speichers die Voreinstellungsbetriebsart, die Benachrichtigungsbetriebsart oder die Zwangsentsperrungsbetriebsart anzeigt, Durchführen des Sperrens am Speicher; und
wenn der Offline-Merker des Speichers die Migrationsbetriebsart anzeigt, Migrieren des Speichers, und wenn der Speicher erfolgreich migriert worden ist, Sperren eines migrierten Speichers und Setzen für den migrierten Speicher eines Offline-Merkers, der die Migrationsbetriebsart anzeigt; und wenn der Speicher erfolglos migriert worden ist, Durchführen des Sperrens am Speicher und Modifizieren des Offline-Merkers des Speichers, um die Voreinstellungsbetriebsart anzuzeigen.

7. Verfahren nach einem der Ansprüche 3 bis 6, wobei das Versetzen des Speichers in einen Offline-Zustand gemäß dem Offline-Merker des Speichers aufweist:
wenn der Offline-Merker des Speichers die Voreinstellungsbetriebsart oder die Migrationsbetriebsart anzeigt, darauf warten, dass der Speicher entsperrt wird, und Migrieren des Speichers, nachdem der Speicher entsperrt worden ist;
wenn der Offline-Merker des Speichers die Benachrichtigungsbetriebsart anzeigt, Veranlassen des Benutzerprozesses, den Speicher zu entsperren, Migrieren des Speichers, nachdem der Speicher entsperrt worden ist, und Veranlassen des Benutzerprozesses, den migrierten Speicher zu sperren, nachdem der Speicher migriert worden ist; und
wenn der Offline-Merker des Speichers die Zwangsentsperrungsbetriebsart anzeigt, Durchführen eines Entsperrens am Speicher, Migrieren des Speichers, nachdem der Speicher entsperrt worden ist, Durchführen des Sperrens am migrierten Speicher und Setzen für den migrierten Speicher eines Offline-Merkers, der die Zwangsentsperrungsbetriebsart anzeigt.

8. Verfahren nach einem der Ansprüche 3 bis 7, das ferner aufweist:
Empfangen einer Entsperranforderung, die durch den Benutzerprozess gesendet wird, wobei die Entsperranforderung zum Anfordern des Durchführens eines Entsperrens am Speicher verwendet wird; und
gemäß der Entsperranforderung, wenn der Offline-Merker des Speichers die Migrationsbetriebsart anzeigt, Neumigrieren des Speichers zu einem Knoten, auf dem der Benutzerprozess ausgeführt wird.

9. Speicherverwaltungseinheit, die Folgendes aufweist:
ein erstes Empfangsmodul, das konfiguriert ist, eine Zuweisungsanforderung zu empfangen, die durch einen Benutzerprozess gesendet wird, wobei die Zuweisungsanforderung zum Anfordern des Zuweisens eines Speichers eines Computersystems für den Benutzerprozess verwendet wird;
ein Zuweisungsmodul, das konfiguriert ist, den Speicher für den Benutzerprozess gemäß der Zuweisungsanforderung zuzuweisen, die durch das erste Empfangsmodul empfangen wird, und einen Offline-Merker für den Speicher zu setzen, wobei der Offline-Merker zum Anzeigen einer von mehreren Offline-Betriebsarten des Speichers verwendet wird, die verwendet werden, wenn es erforderlich ist, einen gesperrten Speicher in einen Offline-Zustand zu versetzen;
ein zweites Empfangsmodul, das konfiguriert ist, eine Sperranforderung zu empfangen, die durch den Benutzerprozess gesendet wird, wobei die Sperranforderung zum Anfordern des Durchführens des Sperrens am Speicher des Computersystems verwendet wird;
ein Sperrmodul, das konfiguriert ist, ein Sperren am Speicher gemäß der Sperranforderung, die durch das zweite Empfangsmodul empfangen wird, und dem Offline-Merker des Speichers durchzuführen; und
ein Offline-Modul, das konfiguriert ist, den durch das Sperrmodul gesperrten Speicher gemäß der Offline-Betriebsart, die im Offline-Merker des Speichers angezeigt wird, in einen Offline-Zustand zu versetzen.

10. Speicherverwaltungseinheit nach Anspruch 9, die ferner aufweist:
ein drittes Empfangsmodul, das konfiguriert ist, eine Modifikationsanforderung zu empfangen, die Betriebsartinformationen aufweist und durch den Benutzerprozess gesendet wird, wobei die Betriebsartinformationen eine Offline-Betuebsart anzeigen, die durch den Benutzerprozess für den Speicher eingestellt wird; und
ein Modifikationsmodul, das konfiguriert ist, gemäß den Betriebsartinformationen, die durch das dritte Empfangsmodul empfangen werden, den Offline-Merker des Speichers zu modifizieren, um die durch den Benutzerprozess eingestellte Offline-Betriebsart anzuzeigen.

11. Speicherverwaltungseinheit nach Anspruch 9 oder 10, wobei die Offline-Betriebsart eine Voreinstellungsbetriebsart und/oder eine Migrationsbetriebsart und/oder eine Benachrichtigungsbetriebsart und/oder eine Zwangsentsperrungsbetriebsart aufweist.

12. Speicherverwaltungseinheit nach Anspruch 11, die ferner aufweist:
ein Festlegungsmodul, das konfiguriert ist, wenn die Offline-Betriebsart des Speichers die Voreinstellungsbetriebsart ist, eine geeignetere Offline-Betriebsart für den Speicher gemäß einem Erfordernis des Computersystems neu festzulegen, und den Offline-Merker des Speichers zu modifizieren, um die Offline-Betriebsart anzuzeigen, die neu festgelegt worden ist.

13. Speicherverwaltungseinheit nach Anspruch 12, wobei das Festlegungsmodul aufweist:
ein erstes Festlegungsuntermodul, das konfiguriert ist, die Offline-Betriebsart des Speichers auf die Voreinstellungsbetriebsart festzulegen, wenn das Computersystem Systembetriebsleistung benötigt; und
ein zweites Festlegungsuntermodul, das konfiguriert ist, die Offline-Betriebsart des Speichers auf die Migrationsbetriebsart festzulegen, wenn das Computersystem Hot-Swap-Leistung benötigt.

14. Speicherverwaltungseinheit nach einem der Ansprüche 11 bis 13, wobei das Sperrmodul aufweist:
ein erstes Sperruntermodul, das konfiguriert ist, ein Sperren am Speicher durchzuführen, wenn der Offline-Merker des Speichers die Voreinstellungsbetriebsart, die Benachrichtigungsbetriebsart oder die Zwangsentsperrungsbetriebsart anzeigt; und
ein zweites Sperruntermodul, das konfiguriert ist, den Speicher zu migrieren, wenn der Offline-Merker des Speichers die Migrationsbetriebsart anzeigt, und wenn der Speicher erfolgreich migriert worden ist, ein Sperren an einem migrierten Speicher durchzuführen und für den migrierten Speicher einen Offline-Merker zu setzen, der die Migrationsbetriebsart anzeigt; und wenn der Speicher erfolglos migriert worden ist, ein Sperren am Speicher durchzuführen und den Offline-Merker des Speichers zu modifizieren, um die Voreinstellungsbetriebsart anzuzeigen.

15. Speicherverwaltungseinheit nach einem der Ansprüche 11 bis 14, wobei das Offline-Modul aufweist:
ein erstes Offline-Untermodul, das konfiguriert ist, darauf zu warten, dass der Speicher entsperrt wird, wenn der Offline-Merker des Speichers die Voreinstellungsbetriebsart oder die Migrationsbetriebsart anzeigt, und den Speicher zu migrieren, nachdem der Speicher entsperrt worden ist;
ein zweites Offline-Untermodul, das konfiguriert ist, den Benutzerprozess zu veranlassen, den Speicher zu entsperren, wenn der Offline-Merker des Speichers die Benachrichtigungsbetriebsart anzeigt, den Speicher zu migrieren, nachdem der Speicher entsperrt worden ist, und den Benutzerprozess zu veranlassen, den migrierten Speicher zu sperren, nachdem der Speicher migriert worden ist; und
ein drittes Offline-Untermodul, das konfiguriert ist, ein Entsperren am Speicher durchzuführen, wenn der Offline-Merker des Speichers die Zwangsentsperrungsbetriebsart anzeigt, den Speicher zu migrieren, nachdem der Speicher entsperrt worden ist, ein Sperren am migrierten Speicher durchzuführen, und für den migrierten Speicher einen Offline-Merker zu setzen, der die Zwangsentsperrungsbetriebsart anzeigt.

16. Speicherverwaltungseinheit nach einem der Ansprüche 11 bis 15, die ferner aufweist:
ein viertes Empfangsmodul, das konfiguriert ist, eine Entsperranforderung zu empfangen, die durch den Benutzerprozess gesendet wird, wobei die Entsperranforderung zum Anfordern des Durchführens eines Entsperrens am Speicher verwendet wird; und
ein Neumigrationsmodul, das konfiguriert ist, gemäß der durch das vierte Empfangsmodul empfangenen Entsperranforderung und wenn der Offline-Merker des Speichers die Migrationsbetriebsart anzeigt, den Speicher neu zu einem Knoten zu migrieren, wo der Benutzerprozess ausgeführt wird.

17. Computersystem, das mindestens einen Speicher und eine Speicherverwaltungseinheit nach einem der Ansprüche 9 bis 16 aufweist, wobei die Speicherverwaltungseinheit konfiguriert ist, den mindestens einen Speicher zu verwalten.

## Revendications

1. Procédé de gestion d'une mémoire d'un système informatique, comprenant les étapes suivantes :
recevoir une demande d'allocation envoyée par un processus utilisateur, où la demande d'allocation est utilisée pour demander d'allouer la mémoire du système informatique pour le processus utilisateur ;
allouer la mémoire pour le processus utilisateur conformément à la demande d'allocation et définir un indicateur hors ligne pour la mémoire, où l'indicateur hors ligne est utilisé pour indiquer un mode parmi plusieurs modes hors ligne de la mémoire qui sera utilisé lorsqu'il sera demandé de placer une mémoire verrouillée hors ligne ;
recevoir une demande de verrouillage envoyée par le processus utilisateur, où la demande de verrouillage est utilisée pour demander de procéder au verrouillage de la mémoire ;
procéder au verrouillage de la mémoire conformément à la demande de verrouillage et à l'indicateur hors ligne de la mémoire ; et
placer la mémoire hors ligne conformément au mode hors ligne indiqué dans l'indicateur hors ligne de la mémoire.

2. Procédé selon la revendication 1, comprenant en outre les étapes suivantes :
recevoir une demande de modification qui comprend des informations de mode et qui est envoyée par le processus utilisateur, où les informations de mode indiquent un mode hors ligne défini par le processus utilisateur pour la mémoire ; et
modifier, conformément aux informations de mode, l'indicateur hors ligne de la mémoire pour indiquer le mode hors ligne défini par le processus utilisateur.

3. Procédé selon la revendication 1 ou la revendication 2, dans lequel le mode hors ligne comprend au moins un mode parmi un mode par défaut, un mode de migration, un mode de notification et un mode de déverrouillage forcé.

4. Procédé selon la revendication 3, comprenant en outre les étapes suivantes :
si le mode hors ligne de la mémoire est le mode par défaut, redéterminer un mode hors ligne plus approprié pour la mémoire conformément à une exigence du système informatique, et modifier l'indicateur hors ligne de la mémoire pour indiquer le mode hors ligne qui est redéterminé.

5. Procédé selon la revendication 4, dans lequel la redétermination d'un mode hors ligne plus approprié pour la mémoire suivant l'exigence du système informatique comprend les étapes suivantes :
si le système informatique requiert des performances de fonctionnement du système, déterminer le mode hors ligne de la mémoire pour qu'il soit le mode par défaut ; et
si le système informatique requiert des performances de remplacement à chaud, déterminer le mode hors ligne de la mémoire pour qu'il soit le mode de migration.

6. Procédé selon l'une quelconque des revendications 3 à 5, dans lequel le fait de procéder au verrouillage de la mémoire conformément à la demande de verrouillage et à l'indicateur hors ligne de la mémoire comprend les étapes suivantes :
si l'indicateur hors ligne de la mémoire indique le mode par défaut, le mode de notification ou le mode de déverrouillage forcé, procéder au verrouillage de la mémoire ; et
si l'indicateur hors ligne de la mémoire indique le mode de migration, faire migrer la mémoire, et si la mémoire a été migrée avec succès, verrouiller une mémoire migrée et définir, pour la mémoire migrée, un indicateur hors ligne indiquant le mode de migration ; et si la mémoire n'a pas été migrée avec succès, procéder au verrouillage de la mémoire et modifier l'indicateur hors ligne de la mémoire pour indiquer le mode par défaut.

7. Procédé selon l'une quelconque des revendications 3 à 6, dans lequel la mise hors ligne de la mémoire conformément à l'indicateur hors ligne de la mémoire comprend les étapes suivantes :
si l'indicateur hors ligne de la mémoire indique le mode par défaut ou le mode de migration, attendre que la mémoire soit déverrouillée, et faire migrer la mémoire après que la mémoire a été déverrouillée ;
si l'indicateur hors ligne de la mémoire indique le mode de notification, déclencher le processus utilisateur pour déverrouiller la mémoire, faire migrer la mémoire après que la mémoire a été déverrouillée, et déclencher le processus utilisateur pour verrouiller la mémoire migrée après que la mémoire a été migrée ; et
si l'indicateur hors ligne de la mémoire indique le mode de déverrouillage forcé, procéder au déverrouillage de la mémoire, faire migrer la mémoire après que la mémoire a été déverrouillée, procéder au verrouillage de la mémoire migrée, et définir, pour la mémoire migrée, un indicateur hors ligne indiquant le mode de déverrouillage forcé.

8. Procédé selon l'une quelconque des revendications 3 à 7, comprenant en outre les étapes suivantes :
recevoir une demande de déverrouillage envoyée par le processus utilisateur, où la demande de déverrouillage est utilisée pour demander de procéder au déverrouillage de la mémoire ; et
conformément à la demande de déverrouillage, si l'indicateur hors ligne de la mémoire indique le mode de migration, procéder à une remigration de la mémoire vers un noeud sur lequel le processus utilisateur est exécuté.

9. Unité de gestion de mémoire, comprenant :
un premier module de réception, configuré pour recevoir une demande d'allocation envoyée par un processus utilisateur, où la demande d'allocation est utilisée pour demander d'allouer une mémoire d'un système informatique pour le processus utilisateur ;
un module d'allocation, configuré pour allouer la mémoire pour le processus utilisateur conformément à la demande d'allocation reçue par le premier module de réception et définir un indicateur hors ligne pour la mémoire, où l'indicateur hors ligne est utilisé pour indiquer un mode parmi plusieurs modes hors ligne de la mémoire qui sera utilisé lorsqu'il sera demandé de placer une mémoire verrouillée hors ligne ;
un deuxième module de réception, configuré pour recevoir une demande de verrouillage envoyée par le processus utilisateur, où la demande de verrouillage est utilisée pour demander de procéder au verrouillage de la mémoire du système informatique ;
un module de verrouillage, configuré pour procéder à un verrouillage de la mémoire conformément à la demande de verrouillage reçue par le deuxième module de réception et à l'indicateur hors ligne de la mémoire ; et
un module hors ligne, configuré pour placer hors ligne la mémoire verrouillée par le module de verrouillage conformément au mode hors ligne indiqué dans l'indicateur hors ligne de la mémoire.

10. Unité de gestion de mémoire selon la revendication 9, comprenant en outre :
un troisième module de réception, configuré pour recevoir une demande de modification qui comprend des informations de mode et qui est envoyée par le processus utilisateur, où les informations de mode indiquent un mode hors ligne défini par le processus utilisateur pour la mémoire ; et
un module de modification, configuré pour modifier, conformément aux informations de mode reçues par le troisième module de réception, l'indicateur hors ligne de la mémoire pour indiquer le mode hors ligne défini par le processus utilisateur.

11. Unité de gestion de mémoire selon la revendication 9 ou la revendication 10, dans laquelle le mode hors ligne comprend au moins un mode parmi un mode par défaut, un mode de migration, un mode de notification et un mode de déverrouillage forcé.

12. Unité de gestion de mémoire selon la revendication 11, comprenant en outre :
un module de détermination, configuré, si le mode hors ligne de la mémoire est le mode par défaut, pour redéterminer un mode hors ligne plus approprié pour la mémoire conformément à une exigence du système informatique, et pour modifier l'indicateur hors ligne de la mémoire pour indiquer le mode hors ligne qui est redéterminé.

13. Unité de gestion de mémoire selon la revendication 12, dans laquelle le module de détermination comprend :
un premier sous-module de détermination, configuré pour déterminer le mode hors ligne de la mémoire pour qu'il soit le mode par défaut lorsque le système informatique requiert des performances de fonctionnement du système ; et
un second sous-module de détermination, configuré pour déterminer le mode hors ligne de la mémoire pour qu'il soit le mode de migration lorsque le système informatique requiert des performances de remplacement à chaud.

14. Unité de gestion de mémoire selon l'une quelconque des revendications 11 à 13, dans laquelle le module de verrouillage comprend :
un premier sous-module de verrouillage, configuré pour procéder au verrouillage de la mémoire lorsque l'indicateur hors ligne de la mémoire indique le mode par défaut, le mode de notification ou le mode de déverrouillage forcé ; et
un second sous-module de verrouillage, configuré pour faire migrer la mémoire lorsque l'indicateur hors ligne de la mémoire indique le mode de migration, et si la mémoire a été migrée avec succès, pour procéder au verrouillage d'une mémoire migrée et définir, pour la mémoire migrée, un indicateur hors ligne indiquant le mode de migration ; et si la mémoire n'a pas été migrée avec succès, pour procéder au verrouillage de la mémoire et modifier l'indicateur hors ligne de la mémoire pour indiquer le mode par défaut.

15. Unité de gestion de mémoire selon l'une quelconque des revendications 11 à 14, dans laquelle le module hors ligne comprend :
un premier sous-module hors ligne, configuré pour attendre que la mémoire soit déverrouillée lorsque l'indicateur hors ligne de la mémoire indique le mode par défaut ou le mode de migration, et faire migrer la mémoire après que la mémoire a été déverrouillée ;
un deuxième sous-module hors ligne, configuré pour déclencher le processus utilisateur pour déverrouiller la mémoire lorsque l'indicateur hors ligne de la mémoire indique le mode de notification, faire migrer la mémoire après que la mémoire a été déverrouillée, et déclencher le processus utilisateur pour verrouiller la mémoire migrée après que la mémoire a été migrée ; et
un troisième sous-module hors ligne, configuré pour procéder au déverrouillage de la mémoire lorsque l'indicateur hors ligne de la mémoire indique le mode de déverrouillage forcé, faire migrer la mémoire après que la mémoire a été déverrouillée, procéder au verrouillage de la mémoire migrée, et définir, pour la mémoire migrée, un indicateur hors ligne indiquant le mode de déverrouillage forcé.

16. Unité de gestion de mémoire selon l'une quelconque des revendications 11 à 15, comprenant en outre :
un quatrième module de réception, configuré pour recevoir une demande de déverrouillage envoyée par le processus utilisateur, où la demande de déverrouillage est utilisée pour demander de procéder au déverrouillage de la mémoire ; et
un module de remigration, configuré, conformément à la demande de déverrouillage reçue par le quatrième module de réception et lorsque l'indicateur hors ligne de la mémoire indique le mode de migration, pour procéder à une remigration de la mémoire vers un noeud sur lequel le processus utilisateur est exécuté.

17. Système informatique, comprenant au moins une mémoire, et une unité de gestion de mémoire selon l'une quelconque des revendications 9 à 16, dans lequel l'unité de gestion de mémoire est configurée pour gérer l'au moins une mémoire.
